# EUROPEAN PATENT APPLICATION

(11) **EP 4 528 087 A1**
(43) Date of publication of application: **26.03.2025**
(21) Application number: 24821731.7
(22) Date of filing: 21.05.2024
(51) Int. Cl.: F02B 75/24, B60K 6/40, B60K 6/46, F01L 1/02, F01L 1/12, F02B 63/04, F02D 29/06, F02M 35/10, F02M 35/104

(54) **RANGE EXTENDER FOR BATTERY ELECTRIC VEHICLE**

(30) Priority: 19.06.2023 JP 2023099866; 01.09.2023 JP 2023142229
(71) Applicant: Muto, Naoto, Kofu-shi, Yamanashi 400-0024 (JP); Nogai, Yasunobu, Sayama-shi, Saitama 350-1335 (JP)
(72) Inventor: Muto, Naoto, Kofu-shi, Yamanashi 400-0024 (JP); Nogai, Yasunobu, Sayama-shi, Saitama 350-1335 (JP)
(74) Representative: Staeger & Sperling Partnerschaftsgesellschaft mbB
(86) International application number: PCT/JP2024/018587
(87) International publication number: WO 2024/262218

(57) **Abstract**

A BEV range extender 1 includes: a horizontally opposed two-cylinder engine dedicated for power generation 2; a generator 3; a fuel tank 4 of the engine dedicated for power generation 2; and a cooling system 8 of the engine dedicated for power generation 2. The engine dedicated for power generation 2 includes: a crankshaft 11 having a rotation center axis that is horizontal; two cylinders 12 that are arranged in an opposed manner with the crankshaft 11 interposed therebetween; and pistons 13 provided within the respective cylinders 12 such that the pistons are opposed to each other with the crankshaft 11 interposed therebetween. The generator 3 is disposed at an approximately center portion in a length direction of the engine dedicated for power generation 2 such that the engine dedicated for power generation 2 and the generator 3 are T-shaped in planar view.

## Description

### Technical Field

The present invention relates to a range extender for a battery electric vehicle, the range extender installed in a battery electric vehicle having four or more wheels and used for extending its driving range.

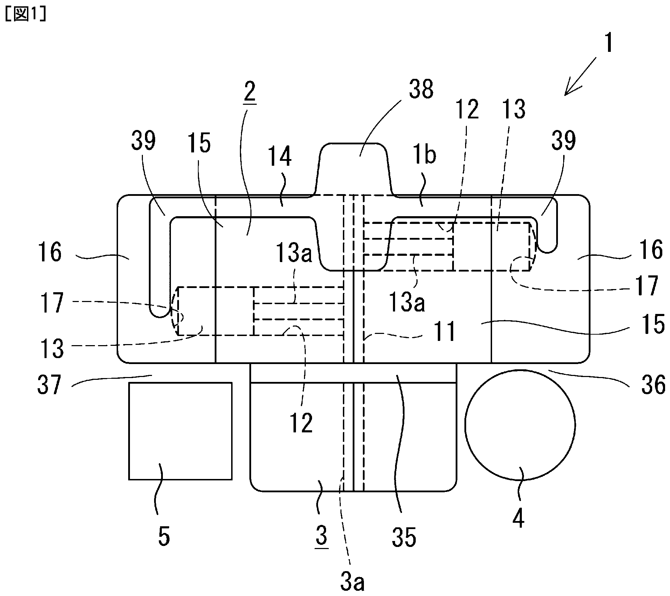

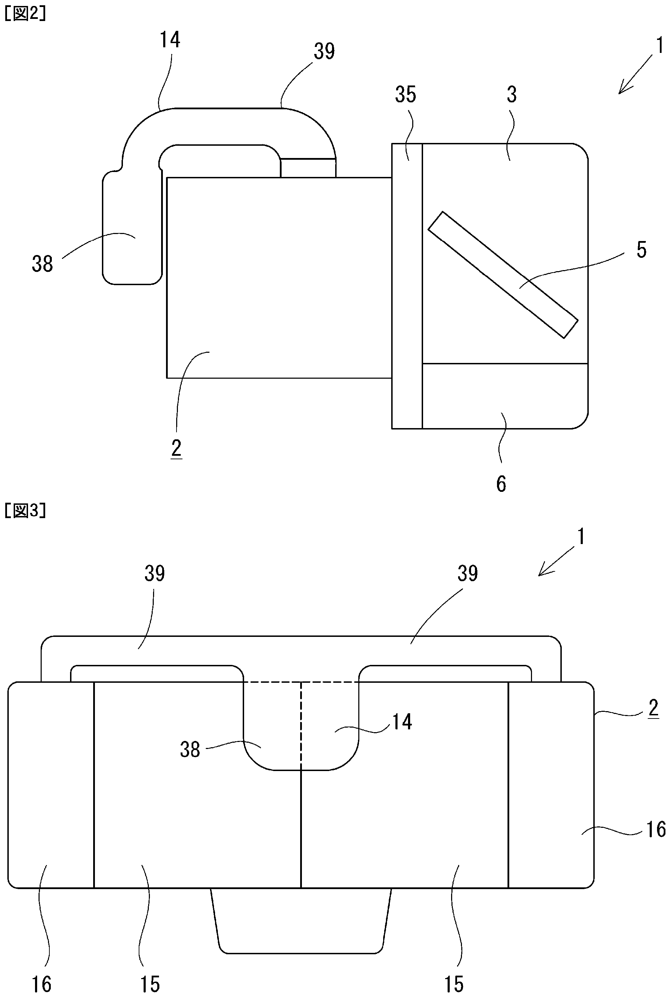

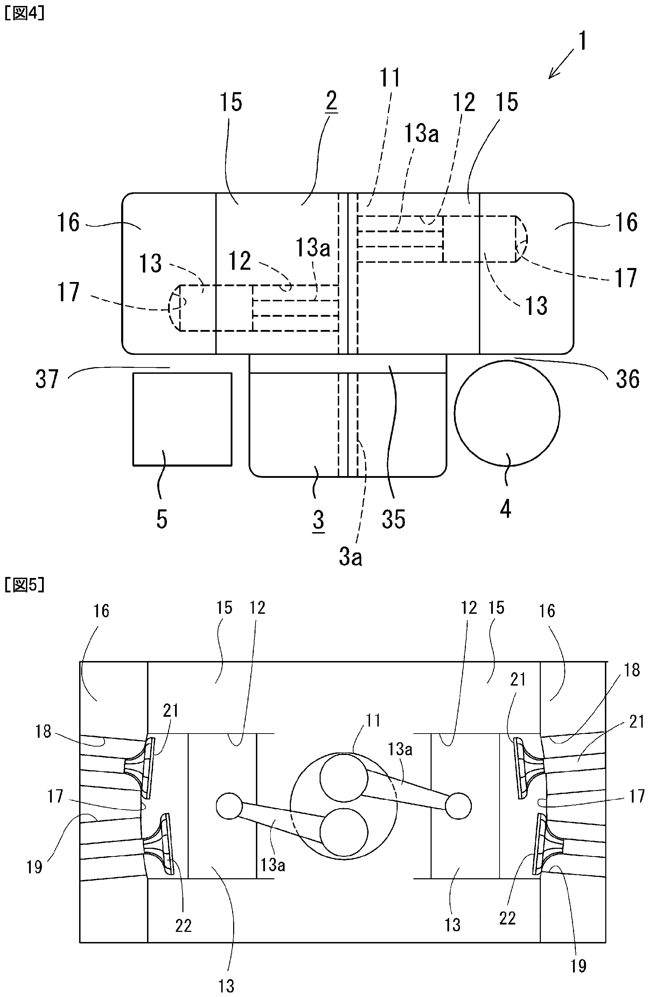

In the DESCRIPTION and CLAIMS, the left side and the right side of FIG. 1 and FIG. 4 will be respectively referred to as a left side and a right side, and the upper side and the lower side of FIG. 2 and FIG. 3 will be respectively referred to as an upper side and a lower side. In addition, the upper side of FIG. 1 and FIG. 4 (the left side of FIG. 2) will be referred to as a front side and the opposite side thereof will be referred to as a back side.

### Background Art

In the market in the world's major advanced countries, battery electric vehicles which are equipped with batteries and travel using only motors for traveling that are driven by the batteries (hereinafter, sometimes referred to as BEVs) have been rapidly spreading. The BEVs are a vehicle that includes a battery and a motor for traveling that is driven by the battery, and various types of the BEVs, including passenger vehicles, SUVs (sport utility vehicles), pickup trucks, van-type trucks, etc., have been developed. However, in the case of any type of BEV, there has been a common problem that its driving range is short and relatively long time is required for charging the battery because of the issues related to the energy capacity of an installable battery.

To solve such a problem, various types of range extenders for BEVs have been proposed. For example, Patent Literature 1 discloses a range extender for a BEV, the range extender including: an engine for power generation; a generator that generates power by driving of the engine for power generation; a fuel tank of the engine for power generation; and a cooling system of the engine for power generation, wherein the range extender includes: a crankcase incorporating a crankshaft disposed such that a rotation center axis thereof is horizontal with a longitudinal direction of the crankshaft being directed in a vehicle width direction; a cylinder case incorporating a cylinder disposed only on one side of the crankshaft such that an axis direction of the cylinder is perpendicular to the vehicle width direction; and a piston driven in the cylinder in a direction perpendicular to the vehicle width direction, and the generator is disposed at one end portion, in a longitudinal direction, of the crankcase so as to align in a straight line with the crankcase, the cooling system is disposed at another end portion, in the longitudinal direction, of the crankcase so as to align in a straight line with the crankcase, the generator has a rotating shaft that is connected to the crankshaft, the cylinder case and an assembly consisting of: the crankcase; the generator; and the cooling system are T-shaped in planar view, and the fuel tank is disposed in either one of spaces surrounded by: a vertical plane where an end portion, of the cooling system, on a side opposite to the crankcase is located; and a vertical plane where an end portion of the engine for power generation, on a side opposite to the crankcase is located, such that part of the fuel tank protrudes from the space.

### Citation List

### Patent Literature

[Patent Literature 1] Japanese Unexamined Patent Application Publication No. JP-A-2022-72237

### Summary of Invention

### Technical Problem

However, the range extender for a BEV according to Patent Literature 1, is configured such that the crankshaft of the engine for power generation has a longitudinal direction which is directed in the vehicle width direction, the cylinder is disposed only on one side of the crankshaft such that the axial direction thereof is directed in the vehicle width direction, and the piston is driven in the cylinder in a direction perpendicular to the vehicle width direction, and therefore, this engine for power generation is an in-line engine that generates relatively large vibrations. As a result, relatively large vibrations are to be transmitted to an occupant of the vehicle.

An object of the present invention is to overcome the above-described problem and to provide a range extender for a BEV that achieves reduction in vibration generated and that is capable of coping with motor vehicle exhaust emission regulations and automobile collision safety standards such that the range extender may be used for various types of BEVs that are different in car body structure and size.

### Solution to Problem

The present invention consists of the following aspects in order to achieve the above-described object.
1) A range extender for a battery electric vehicle, the range extender configured to supply power to a battery for driving the battery electric vehicle, and the range extender including: an engine dedicated for power generation; a generator configured to generate power by driving of the engine dedicated for power generation; a fuel tank of the engine dedicated for power generation; and a cooling system of the engine dedicated for power generation, wherein
   the engine dedicated for power generation is a horizontally opposed engine, and includes: a crankshaft having a rotation center axis that is horizontal; an even number of cylinders in total that are arranged on both sides of the crankshaft in equal number such that the cylinders are opposed to each other with the crankshaft interposed therebetween; and pistons provided within the respective cylinders such that the pistons are opposed to each other with the crankshaft interposed therebetween,
   the generator is disposed at an approximately center portion in a length direction of the engine dedicated for power generation such that the engine dedicated for power generation and the generator are T-shaped in planar view, and
   the generator has a rotating shaft that is disposed horizontally, and is disposed coaxially with the crankshaft or disposed on an axis parallel to the crankshaft, and the rotating shaft is connected to the crankshaft.
2) The range extender for a battery electric vehicle, according to the above-described aspect 1), wherein the rotating shaft of the generator is connected to the crankshaft via a power transmission device, and rotation of the crankshaft causes the rotating shaft to be rotated with acceleration or deceleration via the power transmission device.
3) The range extender for a battery electric vehicle, according to the above-described aspect 1), wherein the engine dedicated for power generation is a horizontally opposed two-cylinder, four-cylinder, or six-cylinder engine, and the cylinders are arranged on both left and right sides of the crankshaft with a longitudinal direction of each of the cylinders directed in a left-right direction.
4) The range extender for a battery electric vehicle, according to the above-described aspect 1), wherein the fuel tank is disposed such that an entirety of the fuel tank is accommodated within at least either one of two spaces surrounded by: vertical planes where both ends, in a longitudinal direction, of the engine dedicated for power generation are located; and a vertical plane where a distal end, of the generator, projecting from the engine dedicated for power generation is located.
5) The range extender for a battery electric vehicle, according to the above-described aspect 1), wherein the fuel tank is disposed such that an entirety of the fuel tank is accommodated within either one of two spaces surrounded by: vertical planes where both ends, in a longitudinal direction, of the engine dedicated for power generation are located; and a vertical plane where a distal end, of the generator, projecting from the engine dedicated for power generation is located, and the cooling system is disposed such that at least part of the cooling system is accommodated within another one of the two spaces.
6) The range extender for a battery electric vehicle, according to the above-described aspect 1), wherein the engine dedicated for power generation includes: cylinder blocks arranged on the both sides of the crankshaft so as to sandwich the crankshaft, in which the cylinders are formed; a cylinder head provided on each of the cylinder blocks, in which a combustion chamber corresponding to each of the cylinders, and two intake ports and two exhaust ports facing each corresponding combustion chamber are formed; two intake valves configured to open and close both of the intake ports of each combustion chamber; two exhaust valves configured to open and close both of the exhaust ports of each combustion chamber; and a valvetrain configured to open and close all the intake valves and all the exhaust valves,
   the valvetrain is composed of a first valvetrain unit configured to open and close all the intake valves and a second valvetrain unit configured to open and close all the exhaust valves,
   the first valvetrain unit includes: a first camshaft that is rotated around a horizontal rotation center axis thereof by the crankshaft; first pushrods that are driven by cams of the first camshaft; and first rocker arms that are driven by the first pushrods, and input by the cams of the first camshaft is transmitted to all the intake valves,
   the second valvetrain unit includes: a second camshaft that is rotated around a horizontal rotation center axis thereof by the crankshaft; second pushrods that are driven by cams of the second camshaft; and second rocker arms that are driven by the second pushrods, and input by the cams of the second camshaft is transmitted to all the exhaust valves, and
   either one of the first camshaft and the second camshaft is disposed at a height position above the cylinders and another one of the first camshaft and the second camshaft is disposed at a height position below the cylinders.
7) The range extender for a battery electric vehicle, according to the above-described aspect 6), wherein the cylinders of the engine dedicated for power generation are formed in the cylinder blocks with a longitudinal direction of the cylinders directed in a left-right direction, the two intake ports are formed, adjacently in a front-back direction, at an upper portion of the combustion chamber while the two intake valves are arranged adjacently in the front-back direction, the two exhaust ports are formed, adjacently in the front-back direction, at a lower portion of the combustion chamber while the two exhaust valves are arranged adjacently in the front-back direction, and the two intake valves are arranged above the two exhaust valves,
   the first camshaft of the first valvetrain unit is disposed immediately above the crankshaft and at a height position above the cylinders, and the first pushrods and the first rocker arms provided per cylinder are respectively two in number, and
   the second camshaft of the second valvetrain unit is disposed immediately below the crankshaft and at a height position below the cylinders, and the second pushrods and the second rocker arms provided per cylinder are respectively two in number.
8) The range extender for a battery electric vehicle, according to the above-described aspect 6), wherein the engine dedicated for power generation includes an intake manifold that supplies intake air to the intake port provided in the cylinder head, and the intake manifold has, in an intake air passage thereof, a surge tank and a branch pipe, and the surge tank of the intake manifold is disposed along: a side surface of the engine dedicated for power generation, the side surface being located opposite to a side on which the generator is disposed; and/or a portion on a top surface of the engine dedicated for power generation, the portion being located opposite to a side on which the generator is disposed.
9) The range extender for a battery electric vehicle, according to the above-described aspect 8), wherein a distal end portion of the branch pipe of the intake manifold is connected to a top surface of the cylinder head of the engine dedicated for power generation.
10) The range extender for a battery electric vehicle, according to the above-described aspect 8), wherein the engine dedicated for power generation is a horizontally opposed two-cylinder engine including the cylinders, which are two left and right cylinders, that is, one cylinder on a right side and one cylinder on a left side of the crankshaft, and a distal end portion of the branch pipe of the intake manifold is connected to a side surface of the cylinder head of the engine dedicated for power generation.

### Effects of Invention

In accordance with the range extender for a BEV of the above-described aspects 1) to 10), the engine dedicated for power generation is a horizontally opposed engine, and therefore, generated vibrations become relatively small, and vibrations transmitted to an occupant of the vehicle also become relatively small.

Further, because the generator is disposed at the center portion in the length direction of the engine dedicated for power generation such that the engine dedicated for power generation and the generator are T-shaped in planar view, two spaces are created, which are formed between: the both ends, in the longitudinal direction, of the engine dedicated for power generation; and the distal end, of the generator, projecting from the engine dedicated for power generation. These two spaces that are created by: the engine dedicated for power generation made of a rigid body; and the generator made of a rigid body, and are safe even at a collision, may be effectively utilized as installation spaces for the entire fuel tank, part of the cooling system of the engine dedicated for power generation, and an inverter. As a result, this range extender may be installed without necessitating specific in-vehicle frames or protection frames for safety, even for any chassis designs that are totally different from each other, such as a monocoque construction, which is a mainstream construction for passenger vehicles, and a ladder frame construction, which is a mainstream construction for commercial trucks and pickup trucks, leading to achievement of the miniaturization, compactness, and wight reduction that are requirements for power generation units of various-type BEVs.

Furthermore, because the engine dedicated for power generation and the generator are arranged as described above, the area of a mount to be used for installing the engine dedicated for power generation and the generator onto the car body of the vehicle may be enlarged. As a result, turning moment that the engine dedicated for power generation and the generator generate is easily absorbed and transmission thereof to the car body may be reduced.

In relation to the range extender for a BEV of the above-described aspects 6) and 7), elements of the layout design used for rough determination of the basic combustion and basic exhaust gas components that comply with motor vehicle exhaust emission regulations include: the values of the bore and the stroke of the combustion chamber and the ratio thereof; the number, the shape, and the position of the intake ports and the exhaust ports; and the position of the spark plug. It is essential to ensure the same layout design as that of DOHC four-valve engines of conventional passenger vehicles that have already coped with the motor vehicle exhaust emission regulations in order to ensure the combustion level. Among them, the following layout design is the essential condition for the valvetrain, which is: that one cylinder is provided with two intake ports and two intake valves, and two exhaust ports and two exhaust valves; the straight shape of the port and its position; and that the arrangement of the spark plug at the center is ensured.

In addition, in order to ensure the miniaturization, the compactness, and the weight reduction, which are requirements for the engine dedicated for power generation of the range extender for a BEV, it is possible to restrain the operation for power generation at the time of the high-speed rotation, which undesirably transmits relatively large vibrations to the vehicle occupants, and to charge power by the operation at the intermediate-speed or lower-speed rotation, and therefore, components of the valvetrain for high-speed rotation are omitted whereby the miniaturization, the compactness, and the weight reduction are achieved.

Specifically, the two intake valves configured to open and close the two intake ports are actuated by the first rocker arms, the first pushrods, and the first camshaft of the first valvetrain unit that is provided within the cylinder head and within a cylinder case therefor, and the two exhaust valves configured to the two exhaust ports are actuated by the second rocker arm, the second pushrods, and the second camshaft of the second valvetrain unit that is provided within the cylinder head and within a cylinder case therefor. As a result, it is possible to omit two camshafts from within each of the left and right cylinder heads, that is, four camshafts in total from within the left and right cylinder heads, and it is also possible to omit two cam sprockets of the valve drive system that drives each of the camshafts (four cam sprockets at the right and left). As a result, it is possible to reduce the amount of lubricating oil necessary within the cylinder heads and to realize the miniaturization, compactness, and wight reduction of the range extender as a whole. In addition, it is possible to reduce the cost. As described above, it is possible to provide the engine dedicated for power generation of the range extender, which causes small vibrations, and is small-sized and compact, while ensuring the combustion level equivalent to that of the conventional DOHC engines to comply with the motor vehicle exhaust emission regulations.

In accordance with the range extender for a BEV of the above-described aspects 8) and 9), the surge tank of the intake manifold is disposed along: a side surface of the engine dedicated for power generation, the side surface being located opposite to a side on which the generator is disposed; and/or a portion on a top surface of the engine dedicated for power generation, the portion being located opposite to a side on which the generator is disposed. Therefore, it is possible to relatively reduce the dimensions in the upper-lower direction of the range extender for a BEV, and to reduce the installation space for the BEV.

In the case where a horizontally opposed two-cylinder, four-cylinder, or six-cylinder engine is used as an engine that directly drives the vehicle, there is no choice but to reduce the resistance in the passage from the intake manifold to the intake ports within the cylinder heads of the engine, for the purpose of improving output from at the time of idling rotation to the ordinary rotation area, and further to the allowable maximum rotation, and therefore it is inevitable that this type of engine has a structure in which the intake manifold is vertically raised from the cylinder heads and the chambers are disposed at the center portion while the left and right components are connected on the level of the cylinder.

In contrast, in the case of the engine dedicated for power generation of the range extender for a BEV, although it is essential to ensure the basic combustion and the exhaust emission performance that comply with the motor vehicle exhaust emission regulations, it is possible to restrain the operation for power generation at the time of the high-speed rotation, which transmits relatively large vibrations to the vehicle occupants, and to charge power by the operation at the intermediate-speed or lower-speed rotation. As a result, the shape of the intake manifold does not have to have a structure in which the intake manifold is vertically raised from the cylinder heads, and, as such, the intake manifold may be disposed immediately above from the cylinder heads in a slanted or curved manner. That is, the intake manifolds of the above-described aspect 8) and the above-described aspect 9) have the above-mentioned configuration.

In addition, because the valvetrain is improved as mentioned in the above-described aspects 8) and 9), even when the horizontally opposed engine in which the vibrations is basically small is used, it is possible to reduce the dimension in the height direction of the valvetrain, and it is possible to reduce the dimension in the upper-lower direction of the range extender for a BEV. As a result, it is possible to dispose the range extender for a BEV at any appropriate position in accordance with the car body structure of the BEVs and the size of the car body. Specifically, it is possible to install the range extender for a BEV into any BEV from among of different types in structure and size, such as a passenger vehicle, a SUV, a pickup truck, a van-type truck, etc.

In accordance with the range extender for a BEV according to the above-described aspect 10), the engine dedicated for power generation is a horizontally opposed two-cylinder engine including the cylinders, which are two left and right cylinders, that is, one cylinder on the right side and one cylinder on the left side of the crankshaft, and a distal end portion of the branch pipe of the intake manifold is connected to the side surface of the cylinder head of the engine dedicated for power generation. Therefore, the projection height of the intake manifold, from the top surface of the engine dedicated for power generation, may be lowered further than the height of the range extender for a BEV according to the above-described aspects 8) and 9).

### Brief Description of the Drawings

FIG.1 is a schematic plan view showing a range extender for a BEV, in accordance with the present invention.
FIG. 2 is a schematic side view of the range extender for a BEV, of FIG. 1.
FIG. 3 is a schematic front view of the range extender for a BEV, of FIG. 1.
FIG. 4 is a schematic plan view showing the range extender for a BEV, in accordance with the present invention, with an intake manifold thereof being omitted.
FIG. 5 is a diagram viewed from the front and schematically showing a configuration of part of an engine dedicated for power generation of the range extender for a BEV, of FIG. 1.
FIG. 6 is a perspective view showing a valvetrain of the engine dedicated for power generation of the range extender for a BEV, of FIG. 1.
FIG. 7 is a front view showing the valvetrain of the engine dedicated for power generation of the range extender for a BEV, of FIG. 1.
FIG. 8 is a plan view showing the valvetrain of the engine dedicated for power generation of the range extender for a BEV, of FIG. 1.
FIG. 9 is a front view showing a modification of the intake manifold to be used in the engine dedicated for power generation of the range extender for a BEV, in accordance with the present invention.

### Detailed Description of Embodiments

Hereinafter, an embodiment of the present invention will be described with reference to the drawings.

In the following description, the left side and the right side of FIG. 1 will be respectively referred to as the left and right, the left side and the right side of FIG. 4 will be respectively referred to as the left and right, and the upper side and the lower side of FIG. 2 and FIG. 3 will be respectively referred to as the upper side and the lower side. In addition, the upper side of FIG. 4 (the left side of FIG. 2) will be referred to as the front and the opposite side thereof will be referred to as the back.

In the following description, for the same components and the same portions, the same reference signs will be assigned.

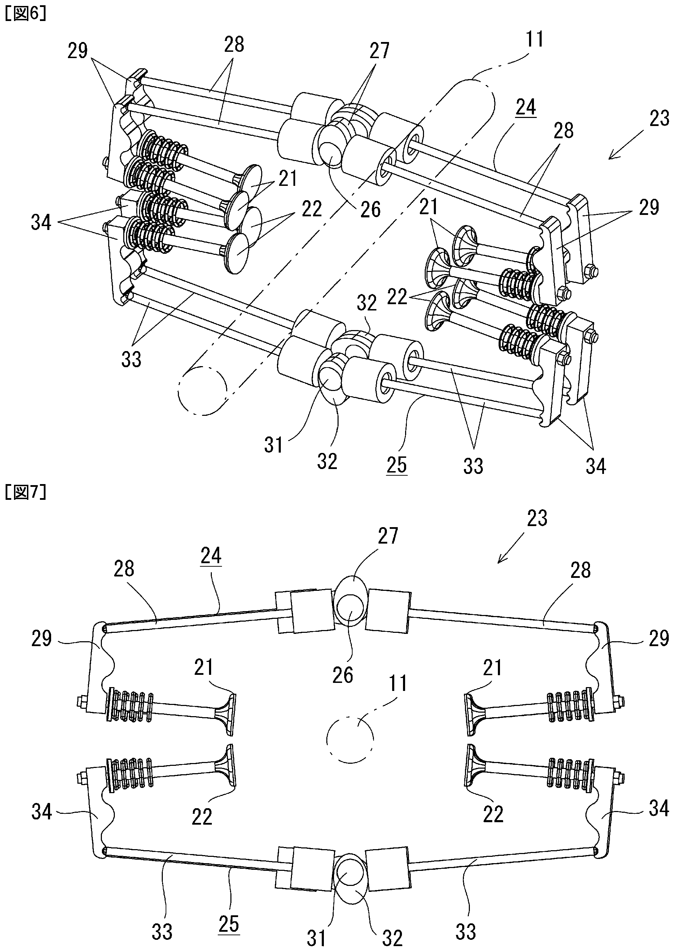

FIG. 1 to FIG. 4 each schematically show an entire configuration of a range extender for a BEV, with some part thereof being omitted. In addition, FIG. 5 shows schematically shows an configuration of part of an engine dedicated for power generation of the range extender for a BEV, and FIG. 6 to FIG. 8 each show a valvetrain of the engine dedicated for power generation of the range extender for a BEV.

In FIG. 1 to FIG. 5, a BEV range extender (1) includes: an engine dedicated for power generation (2); a generator (3) that generates power by driving of the engine dedicated for power generation (2); a fuel tank (4) of the engine dedicated for power generation (2); a cooling system (5) of the engine dedicated for power generation (2); and a mount (not shown) to be used when the BEV range extender (1) is mounted on a vehicle.

Moreover, although not shown in the drawings, the BEV range extender (1) includes electrical equipment necessary for power generation, such as an inverter.

The engine dedicated for power generation (2) is a horizontally opposed engine, and includes: a crankshaft (11) having a horizontal rotation center axis extending in the front-back direction; an even number of (two, in this embodiment) cylinders (12) in total that are arranged on both left and right sides of the crankshaft (11) such that the cylinders (12) respectively provided in equal number on the both sides are opposed to each other with the crankshaft interposed therebetween; pistons (13) that arranged on both of the left and right sides of the crankshaft (11) and provided within respective cylinders (12) such that the pistons (13) on both sides are opposed to each other with the crankshaft interposed therebetween; and an intake manifold (14). The cylinders (12) are arranged on both left and right sides of the crankshaft (11) in equal number, with the longitudinal direction of the cylinders (12) arranged on the left and right sides being directed in the left-right direction.

The engine dedicated for power generation (2) includes: two left and right cylinder blocks (15) arranged on both left and right sides of the crankshaft (11); and two left and right cylinder heads (16) each provided to the corresponding cylinder block (15), and the crankshaft (11) is rotatably supported on both cylinder blocks (15) with the crankshaft (11) sandwiched by both cylinder blocks (15). The two left and right pistons (13) are connected to the crankshaft (11) via respective conrods (13a), and reciprocation motion of both pistons (13) causes the crankshaft (11) to rotate around the rotation center axis. The cylinder blocks (15) and the cylinder heads (16) are separately formed to be mutually fixed in some cases, while the cylinder blocks (15) and the cylinder heads (16) are integrally formed in other cases.

Each of the cylinder blocks (15) of the engine dedicated for power generation (2) is provided with one cylinder (12), and each of the cylinder heads (16) is provided with: one combustion chamber (17) corresponding to a cylinder (12); and two intake ports (18) and two exhaust ports (19) both facing the combustion chamber (17). Both intake ports (18) of each cylinder head (16) are opened and closed respectively by intake valves (21), and both exhaust ports (19) are opened and closed respectively by exhaust valves (22). The two intake ports (18) are formed, adjacently in the front-back direction, at an upper portion of the combustion chamber (17), while the two intake valves (21) that open and close both intake ports (18) are arranged adjacently in the front-back direction. In addition, the two exhaust ports (19) are formed, adjacently in the front-back direction, at a lower portion of the combustion chamber (17), while the two exhaust valves (22) are arranged adjacently in the front-back direction. The two intake valves (21) are arranged above the two exhaust valves (22). That is, the engine dedicated for power generation (2) includes: two cylinders (12) and two combustion chambers (17), four intake ports (18) and four exhaust ports (19), and four intake valves (21) and four exhaust valves (22).

As shown in FIG. 5 to FIG. 8, the intake valves (21) that open and close the four intake ports (18) and the exhaust valves (22) that open and close the four exhaust ports (19) are actuated by a valvetrain (23). The valvetrain (23) is composed of: a first valvetrain unit (24) that actuates all the intake valves (21) that open and close both intake ports (18) facing the left and right combustion chambers (17); and a second valvetrain unit (25) that actuates all the exhaust valves (22) that open and close both exhaust ports (19) facing the left and right combustion chambers (17).The first valvetrain unit (24) is disposed at a height position above the cylinders (12), preferably immediately above the crankshaft (11), and includes: a first camshaft (26) configured to be rotated around a horizontal rotation center axis by the crankshaft (11); four first pushrods (28) in total, that is, two of them on the right side and two of them on the left side, respectively, configured such that each two of the first pushrods (28) are provided for each cylinder (12) and all the first pushrods (28) are driven by two first cams (27) attached to the first camshaft (26); and four first rocker arms (29) in total, that is, two of them on the right side and two of them on the left side, respectively, configured such that each two of the first rocker arms (29) are provided for each cylinder (12) and all the first rocker arms (29) are driven by the first pushrods (28), and input by the first cams (27) of the first camshaft (26) is configured to be transmitted to all the intake valves (21). The first camshaft (26) is disposed immediately above the crankshaft (11) and at a height position above both of the cylinders (12).The second valvetrain unit (25) is disposed at a height position below the cylinders (12), preferably immediately below the crankshaft (11), and includes: a second camshaft (31) configured to be rotated around a horizontal rotation center axis by the crankshaft (11); four second pushrods (33) in total, that is, two of them on the right side and the two of them on the left side, respectively, configured such that each two of the second pushrods (33) are provided for each cylinder (12) and all the second pushrods (33) are driven by two second cams (32) attached to the second camshaft (31); and four second rocker arms (31) in total, that is, two of them on the right side and two of them on the left side, respectively, configured such that each two of the second rocker arms (31) are provided for each cylinder (12) and all the second rocker arms (31) are driven by the second pushrods (33), and input by the second camshaft (27) is configured to be transmitted to all the exhaust valves (22). The second camshaft (31) is disposed immediately below the crankshaft (11) and at a height position below both of the cylinders (11).

It should be noted that the number of the intake ports and the intake valve and the number of the exhaust ports and the exhaust valves are not limited to two. Further, the valvetrain configured to actuate the intake valves and the exhaust valves are not limited to those described above, and those of publicly-known SOHC (single overhead cam) system, DOHC (double overhead cam) system, and OHV (overhead valve) system may be used.

Referring to FIG. 1 and FIG. 4, the generator (3) is disposed at an approximately center portion in the length direction of the engine dedicated for power generation (2) such that the engine dedicated for power generation (2) and the generator (3) are T-shaped in planar view. The rotating shaft (3a) of the generator (3) is disposed horizontally, and is disposed coaxially with the crankshaft (11) or disposed on an axis parallel to the crankshaft (11). The rotating shaft (3a) is connected to the crankshaft (11) via the power transmission device (35), and rotation of the crankshaft (11) causes the rotating shaft (3a) to be rotated with acceleration or deceleration.

The fuel tank (4) is disposed such that the entirety of the fuel tank (4) is accommodated within at least either one of two spaces (36), (37) (within the right space (36), in this embodiment) surrounded by: vertical planes where both ends, in a longitudinal direction, of the engine dedicated for power generation (2) are located; and a vertical plane where a distal end, of the generator (3), projecting from the engine dedicated for power generation (2) is located. The installation location of the fuel tank (4) is not limited thereto, and may be modified appropriately.

The cooling system (5) is disposed such that at least part of the cooling system (5) is accommodated at the side opposite to the right side space (36) where the fuel tank (4) is disposed (accommodated within the left space (37), in this embodiment), out of the two spaces (36), (37) surrounded by: vertical planes where both ends, in a longitudinal direction, of the engine dedicated for power generation (2) are located; and a vertical plane where a distal end, of the generator (3), projecting from the engine dedicated for power generation (2) is located. The installation location of the cooling system (5) is not limited thereto, and may be modified appropriately. For example, the cooling system (5) may be disposed on the front-side side surface of the engine dedicated for power generation (2) of the BEV range extender (1), the front-side side surface being located opposite to the side on which the generator (3) is disposed, such that the cooling system (5) is disposed parallel to the longitudinal direction of the engine dedicated for power generation (2).

In addition, in the above-described spaces (36), (37), electrical equipment necessary for power generation, such as an inverter, is installed in some cases.

The intake manifold (14) has: a surge tank (38); and the same number of branch pipes (39) as the cylinders (12). The surge tank (38) of the intake manifold (14) is disposed along an area: from a front-side side surface of the engine dedicated for power generation (2), the front-side side surface being located opposite to the side on which the generator (3) is disposed; to a portion at the front side on the top surface of the engine dedicated for power generation (2). The branch pipes (39) extend in the left-right direction from the surge tank (38) so as be in communication with the surge tank (38), and the distal end portion of each branch pipe (39) is connected to the top surface of the corresponding cylinder head (16) of the engine dedicated for power generation (2). The branch pipe (39) at the left side is configured to send intake air within the surge tank (38) into the intake ports (21) facing the combustion chamber (17) at the left side, and the branch pipe (39) at the right side is configured to send intake air within the surge tank (38) into the intake ports (21) facing the combustion chamber (17) at the right side.

The above-described BEV range extender (1) is installed at various locations of the BEV.

For example, in the case of a pickup truck, the BEV range extender (1) is disposed at the lower portion of the engine compartment or below the truck bed. In the case of a van-type truck, the BEV range extender (1) is disposed below the van body. In the case of a passenger vehicle, the BEV range extender (1) is disposed at the lower portion of the engine compartment or below the trunk. In the case of a SUV (sport utility vehicle), the BEV range extender (1) is disposed at the lower portion of the engine compartment or below the luggage compartment.

These are merely illustrative, and therefore the installation location of the vehicle range extender (1) is not limited to the one that is shown, and as long as the necessary space is secured, it is possible to install the vehicle range extender (1) at any location.

In addition, in the case where the remaining amount of the battery for driving the BEV, in which the BEV range extender (1) is installed, has been reduced, the engine dedicated for power generation (2) is driven, and power is generated by the generator (3), whereby generated power is supplied to the battery for driving the BEV. As a result, the BEV driving range is extended.

In the above-described embodiment, the surge tank (38) of the intake manifold (14) is disposed along an area: from the front-side side surface of the engine dedicated for power generation (2), the front-side side surface being located opposite to the side on which the generator (3) is disposed; to a portion at the front side on the top surface of the engine dedicated for power generation (2), but the configuration of the surge tank (38) is not limited thereto.

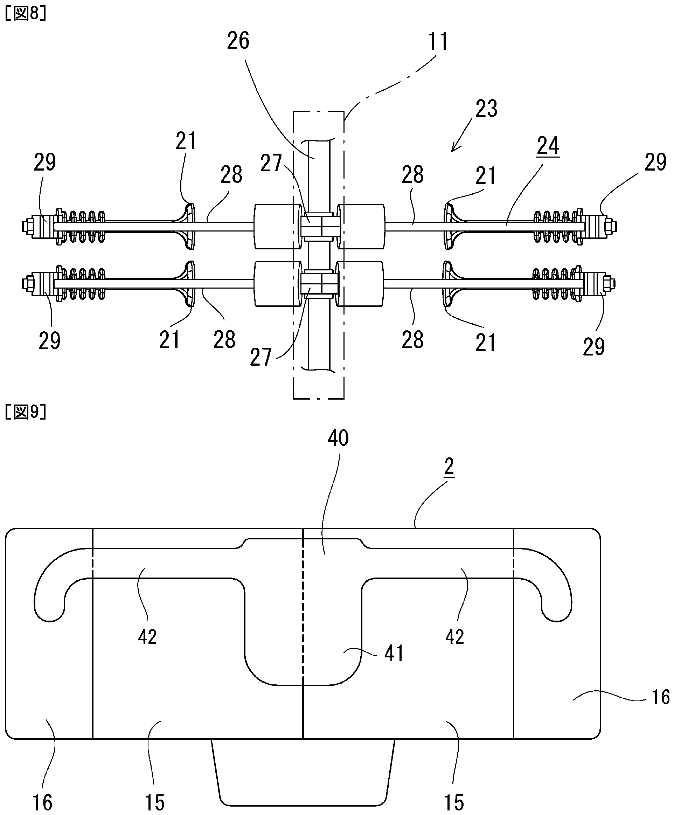

For example, as shown in FIG. 9, the engine dedicated for power generation (2) may include an intake manifold (40) consisting of: a surge tank (41) disposed along the front-side side surface of the engine dedicated for power generation (2); and left and right branch pipes (42) which extend in the left-right direction from the surge tank (41), and each of the distal end portion of which is connected to the front-side side surface of the corresponding cylinder head (16) of the engine dedicated for power generation (2). The branch pipe (42) at the left side is configured to send intake air to the intake ports (21) facing the combustion chamber (17) at the left side, and the branch pipe (42) at the right side is configured to send intake air to the intake ports (21) facing the combustion chamber (17) at the right side.

In addition, in the above-described embodiment, the engine dedicated for power generation (2) is a horizontally opposed engine having two cylinders (12), but is not limited thereto, and may be a horizontally opposed engine including four cylinders or a horizontally opposed engine including six cylinders. In these cases, the distal end of each branch pipe of the intake manifold to be used in the engine dedicated for power generation is connected to the top surface of the cylinder head (16). In addition, in these cases, an even number of cylinders, in equal number on both sides of the crankshaft (11), are arranged, cylinders on both sides of the crankshaft (11) are formed in one cylinder block, while the cylinder block is provided with one cylinder head, and the cylinder head is provided with: a combustion chamber corresponding to each of the cylinders; and two intake ports and two exhaust ports facing the combustion chamber.

### Reference Signs List

(1): vehicle range extender, (2): engine dedicated for power generation, (3): generator, (3a): rotating shaft, (4): fuel tank, (5): cooling system, (11): crankshaft, (12): cylinder, (13): piston, (14): intake manifold, (15): cylinder block, (16): cylinder head, (17): combustion chamber, (18): intake port, (19): exhaust port, (21): intake valve, (22): exhaust valve, (23): valvetrain, (24): first valvetrain unit, (25): second valvetrain unit, (26): first camshaft, (27): first cam, (28): first pushrod, (29): first rocker arm, (31): second camshaft, (32): second cam, (33): second pushrod, (34): second rocker arm, (36), (37): space, (38): surge tank, (39): branch pipe, (40): intake manifold, (41): surge tank, (42): branch pipe

## Claims

1. A range extender for a battery electric vehicle, the range extender configured to supply power to a battery for driving the battery electric vehicle, and the range extender comprising: an engine dedicated for power generation; a generator configured to generate power by driving of the engine dedicated for power generation; a fuel tank of the engine dedicated for power generation; and a cooling system of the engine dedicated for power generation, wherein
the engine dedicated for power generation is a horizontally opposed engine, and comprises: a crankshaft having a rotation center axis that is horizontal; an even number of cylinders in total that are arranged on both sides of the crankshaft in equal number such that the cylinders are opposed to each other with the crankshaft interposed therebetween; and pistons provided within the respective cylinders such that the pistons are opposed to each other with the crankshaft interposed therebetween,
the generator is disposed at an approximately center portion in a length direction of the engine dedicated for power generation such that the engine dedicated for power generation and the generator are T-shaped in planar view, and
the generator has a rotating shaft that is disposed horizontally, and is disposed coaxially with the crankshaft or disposed on an axis parallel to the crankshaft, and the rotating shaft is connected to the crankshaft.

2. The range extender for a battery electric vehicle, according to claim 1, wherein the rotating shaft of the generator is connected to the crankshaft via a power transmission device, and rotation of the crankshaft causes the rotating shaft to be rotated with acceleration or deceleration via the power transmission device.

3. The range extender for a battery electric vehicle, according to claim 1, wherein the engine dedicated for power generation is a horizontally opposed two-cylinder, four-cylinder, or six-cylinder engine, and the cylinders are arranged on both left and right sides of the crankshaft with a longitudinal direction of each of the cylinders directed in a left-right direction.

4. The range extender for a battery electric vehicle, according to claim 1, wherein the fuel tank is disposed such that an entirety of the fuel tank is accommodated within at least either one of two spaces surrounded by: vertical planes where both ends, in a longitudinal direction, of the engine dedicated for power generation are located; and a vertical plane where a distal end, of the generator, projecting from the engine dedicated for power generation is located.

5. The range extender for a battery electric vehicle, according to claim 1, wherein the fuel tank is disposed such that an entirety of the fuel tank is accommodated within either one of two spaces surrounded by: vertical planes where both ends, in a longitudinal direction, of the engine dedicated for power generation are located; and a vertical plane where a distal end, of the generator, projecting from the engine dedicated for power generation is located, and the cooling system is disposed such that at least part of the cooling system is accommodated within another one of the two spaces.

6. The range extender for a battery electric vehicle, according to claim 1, wherein the engine dedicated for power generation comprises: cylinder blocks arranged on the both sides of the crankshaft so as to sandwich the crankshaft, in which the cylinders are formed; a cylinder head provided on each of the cylinder blocks, in which a combustion chamber corresponding to each of the cylinders, and two intake ports and two exhaust ports facing each corresponding combustion chamber are formed; two intake valves configured to open and close both of the intake ports of each combustion chamber; two exhaust valves configured to open and close both of the exhaust ports of each combustion chamber; and a valvetrain configured to open and close all the intake valves and all the exhaust valves,
the valvetrain is composed of a first valvetrain unit configured to open and close all the intake valves and a second valvetrain unit configured to open and close all the exhaust valves,
the first valvetrain unit comprises: a first camshaft that is rotated around a horizontal rotation center axis thereof by the crankshaft; first pushrods that are driven by cams of the first camshaft; and first rocker arms that are driven by the first pushrods, and input by the cams of the first camshaft is transmitted to all the intake valves,
the second valvetrain unit comprises: a second camshaft that is rotated around a horizontal rotation center axis thereof by the crankshaft; second pushrods that are driven by cams of the second camshaft; and second rocker arms that are driven by the second pushrods, and input by the cams of the second camshaft is transmitted to all the exhaust valves, and
either one of the first camshaft and the second camshaft is disposed at a height position above the cylinders and another one of the first camshaft and the second camshaft is disposed at a height position below the cylinders.

7. The range extender for a battery electric vehicle, according to claim 6, wherein the cylinders of the engine dedicated for power generation are formed in the cylinder blocks with a longitudinal direction of the cylinders directed in a left-right direction, the two intake ports are formed, adjacently in a front-back direction, at an upper portion of the combustion chamber while the two intake valves are arranged adjacently in the front-back direction, the two exhaust ports are formed, adjacently in the front-back direction, at a lower portion of the combustion chamber while the two exhaust valves are arranged adjacently in the front-back direction, and the two intake valves are arranged above the two exhaust valves,
the first camshaft of the first valvetrain unit is disposed immediately above the crankshaft and at a height position above the cylinders, and the first pushrods and the first rocker arms provided per cylinder are respectively two in number, and
the second camshaft of the second valvetrain unit is disposed immediately below the crankshaft and at a height position below the cylinders, and the second pushrods and the second rocker arms provided per cylinder are respectively two in number.

8. The range extender for a battery electric vehicle, according to claim 6, wherein the engine dedicated for power generation includes an intake manifold, the intake manifold has a surge tank and a branch pipe in an intake air passage and supplies intake air to the intake port provided in the cylinder head, and the surge tank of the intake manifold is disposed along: a side surface of the engine dedicated for power generation, the side surface being located opposite to a side on which the generator is disposed; and/or a portion on a top surface of the engine dedicated for power generation, the portion being located opposite to a side on which the generator is disposed.

9. The range extender for a battery electric vehicle, according to claim 8, wherein a distal end portion of the branch pipe of the intake manifold is connected to a top surface of the cylinder head of the engine dedicated for power generation.

10. The range extender for a battery electric vehicle, according to claim 8, wherein the engine dedicated for power generation is a horizontally opposed two-cylinder engine including the cylinders, which are two left and right cylinders, that is, one cylinder on a right side and one cylinder on a left side of the crankshaft, and a distal end portion of the branch pipe of the intake manifold is connected to a side surface of the cylinder head of the engine dedicated for power generation.
